Europäisches Patentamt

European Patent Office

Office européen des brevets

(11) Publication number: **0 044 663**
**A2**

## (12) EUROPEAN PATENT APPLICATION

(21) Application number: **81303106.9**

(22) Date of filing: **08.07.81**

(51) Int. Cl.³: **H 02 M 3/155**

(30) Priority: **22.07.80 GB 8023936**

(43) Date of publication of application:
**27.01.82 Bulletin 82/4**

(84) Designated Contracting States:
**CH DE FR IT LI NL SE**

(71) Applicant: **THE MARCONI COMPANY LIMITED**
**Marconi House New Street**
**Chelmsford Essex CM1 1PL(GB)**

(72) Inventor: **Reardon, Denis David Silvey**
**Highfields The Drive Highfield Street**
**Anstey Leicestershire(GB)**

(74) Representative: **Hoste, Colin Francis et al,**
**Marconi House New Street**
**Chelmsford Essex CM1 1PL(GB)**

(54) Improvements in or relating to d.c. converters.

(57) A d.c. converter produces a d.c. output voltage from a lower d.c. input voltage by chopping the input voltage with a switch. A snubbing capacitor is connected across the switch to prevent damage to the switch when it changes from a conductive state to a non-conductive state. The energy diverted to the snubbing capacitor is fed to the output terminals of the converter in a two stage process. It is first transferred to a storage capacitor which together with the snubbing capacitor forms a resonant circuit. The energy is subsequently transferred to the output terminal when the voltage developed across the switch increases to the extent necessary to forward bias a diode which discharges the storage capacitor.

FIG. 1.

## Improvements in or relating to d.c. converters

This invention relates to d.c. converters for producing a d.c. output voltage from a lower d.c. input voltage. Converters of this kind are sometimes termed choppers as the input voltage is usually chopped rapidly by means of a controllable switch; the output of the switch is smoothed and the on/off ratio of the switch determines the level of the d.c. output voltage. Converters of this kind can, in principle, operate in a very efficient manner, providing that the energy lost within the switch itself is small. In practice, however, a great deal of energy may be absorbed within the switching device when it changes from its conductive state to its non-conductive state. Under these conditions, the product of the current flowing through it and the voltage developed across it can be very large and switching devices such as transistors or thyristors can be easily damaged. To prevent the voltage across the switching device rising rapidly when it is rendered non-conductive, it is customary to provide what is termed a snubbing capacitor in parallel with the switch. Snubbing capacitors can accumulate a large amount of energy, particularly when the converter operates at a high frequency and it is necessary to repeatedly discharge the capacitor so that the snubbing sequence repeats at the switching frequency. With many known converters, the energy stored by the capacitor is dissipated as heat when the capacitor is discharged. This is extremely wasteful and although proposals have been put forward for returning this energy to the voltage source, this is not always a satisfactory solution, since generally the energy is required in a load to which the d.c. output voltage is applied. The present invention seeks to provide an improved converter.

According to this invention, a d.c. converter for producing a d.c. output voltage from a lower d.c. input voltage includes a switch connected to receive the input voltage via an inductor, a snubbing capacitor connected in shunt with said switch to restrict the rate of increase of a potential appearing across said switch when it changes from a conductive to a non-conductive state, and a reactive circuit coupled to said capacitor for transferring energy from it to the point at which the d.c.

output voltage is provided.

Preferably said capacitor and said reactive circuit together constitute part of a tuned circuit having an oscillatory half period which is less the period for which the switch is conductive during a switching period.

Preferably the reactive circuit also includes an inductor connected in series with said diode, with the inductance of the inductor determining the oscillatory period of the reactive circuit.

Preferably again said reactive circuit includes a storage capacitor which has a capacitance which is equal to or greater than that of the snubbing capacitor.

Preferably a diode is connected in the current path between the snubbing capacitor and the storage capacitor, so that energy is transferred to the storage capacitor only whilst the potential on the snubbing capacitor exceeds the potential on the storage capacitor and is not subsequently returned to the snubbing capacitor.

The energy held on the storage capacitor is preferably fed to the output terminal of the converter during those periods when the switch is non-conductive. It is usual to connect a large capacitor across the output terminals of the converter in order to remove the periodic fluctuations which would otherwise be present at the switching frequency. In some cases, a low pass filter of greater complexity may be provided, but usually a single large capacitor is sufficient. The output capacitor is charged during those periods whilst the switch is non-conductive, and it acts as an energy reserve for those periods whilst the switch is conductive. Under these conditions, a substantially constant output voltage and current are available to feed a load connected to the output terminals.

Preferably two further diodes are connected to respective terminals of said storage capacitor, one diode serving to discharge said storage capacitor into the output capacitor, and the other diode becoming conductive when said storage capacitor is discharged. In this way energy held in the snubbing capacitor is first transferred into a storage capacitor and it is then transferred to the load via the output capacitor.

The invention is further described by way of example with reference to the accompanying drawings in which,

Figure 1 illustrates a converter in accordance with the present invention and

Figure 2 is an explanatory diagram showing voltage and current waveforms at various points in the converter.

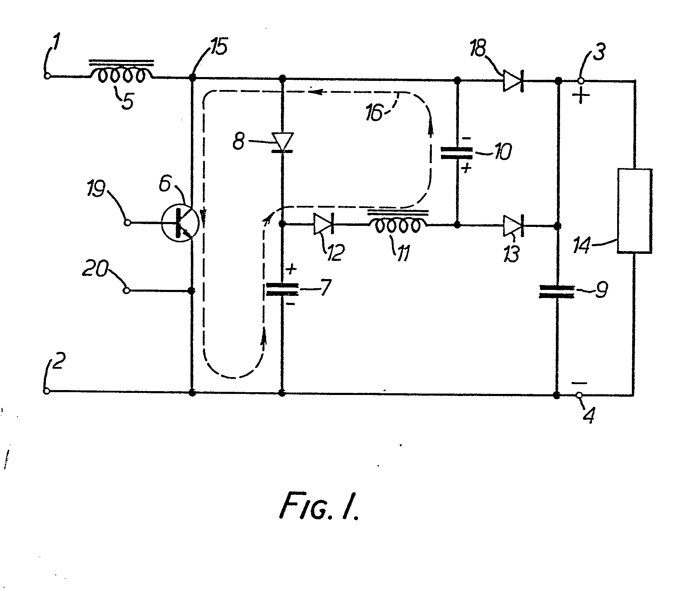

Referring to Figure 1, a d.c. to d.c. converter receives an input d.c. voltage at terminals 1 and 2 and is operative to provide a higher d.c. voltage at output terminals 3 and 4. Such a converter is sometimes termed a step-up chopper. An inductor 5 and a switch 6 are connected in series across the two input terminals 1 and 2. A snubbing capacitor 7 and a diode 8 are connected in series across the switch 6 as shown. A further diode 18 is connected between the junction point of the inductor 5 and the switch 6, and the output terminal 3 and a large output capacitor 9 is connected directly across the two output terminals 3 and 4. In addition, a storage capacitor 10 is provided and it forms part of a serial path, which in addition comprises an inductor 11 and a diode 12, the serial path being connected to the point between the capacitor 7 and the diode 8. An additional diode 13 is connected between output terminal 13 and the junction point between capacitor 10 and inductor 11. In operation, a load 14 is connected across the output terminals 3 and 4. The snubbing capacitor 7, the inductor 11 and the storage capacitor 10 constitute a resonant circuit having an oscillatory period related to the period for which the switch 6 is conductive.

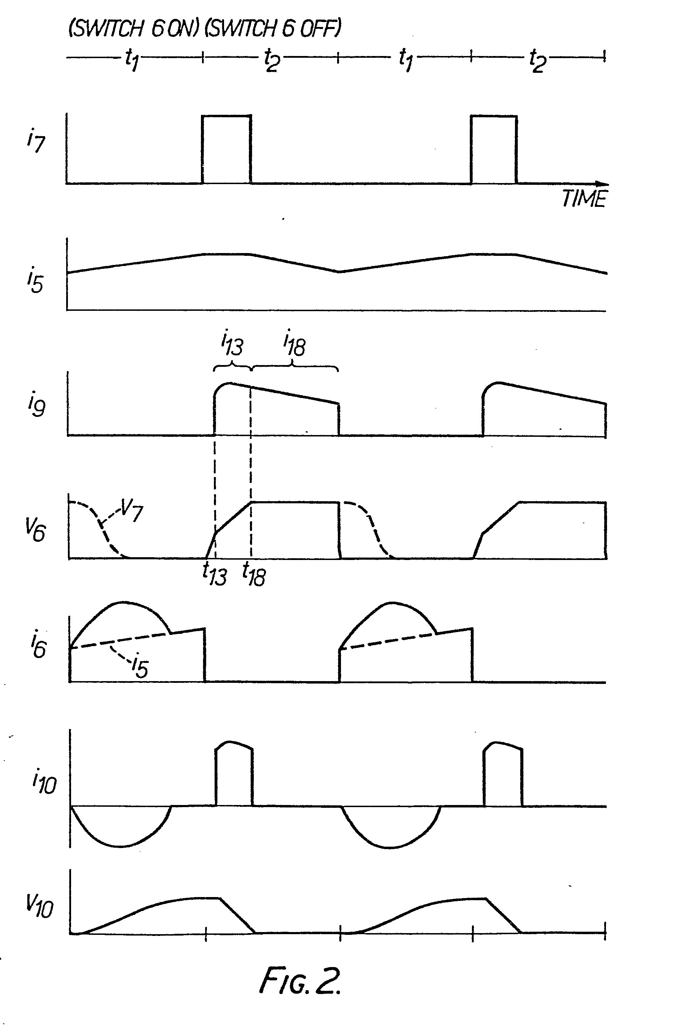

In operation, the switch 6, which typically is a transistor, is repetitively rendered conductive and non-conductive, and the mark-to-space ratio of the on and off periods $t_1$ and $t_2$ respectively determines the level of the output voltage in relation to the input voltage level. In Figure 2, waveforms are provided depicting the operation of the converter, and it is assumed that the conductive period $t_1$ of the switch 6 is equal to the non-conductive period $t_2$. This has the effect of providing an output voltage which is very approximately twice the input voltage level.

When the switch is rendered conductive, current $i_5$ flows through the inductor 5 and the switch 6, with the current rising at a rate determined by the inductance of the serial path. The current $i_6$ flowing through the switch 6 is indicated as is on Figure 2. It consists of a component due to $i_5$ and a component related to the current $i_{10}$ which flows through the capacitor 10. When the switch 6 is rendered non-conductive, the energy stored within the inductor 5 initially flows to the capacitor 7 via the diode 8. As the voltage across the switch 6 rises rapidly, and the capacitor 7 charges via diode 8 which is forward biassed. This charging current is shown as $i_7$ in Figure 2. During those periods when the switch 6 is conductive a very small voltage is dropped across it, and during these periods the polarity of the diode 18 prevents the capacitor 9 discharging through the switch 6. However, as soon as current flows through the diode 18, (which occurs when the potential on capacitor 7 rises sufficiently to forward bias it) the potential on the junction point 15 is approximately that of the output voltage. Thus, when the switch 6 changes from its conductive to its non-conductive state, it would be possible for a very large voltage to be developed across it, whilst it is still conducting at an appreciable current. Under these conditions, the switch 6 could fail and it is to avoid this possibility the snubbing capacitor 7 is provided. The effect of this capacitor 7 is to ensure that when the switch 6 becomes non-conductive, the voltage across it initially rises at a rate determined by the capacitor 7, and in practice the switch 6 is able to become fully non-conductive before the voltage across it rises to the point at which the switch is damaged.

This operation can take place when the switch 6 becomes non-conductive only if the capacitor 7 is in a discharged state and it is consequently necessary to repetitively discharge capacitor 7. In accordance with this invention, the energy held in capacitor 7 is transferred via the diode 12 and the inductor 11 to the storage capacitor 10. This energy transfer is indicated by the negative portion of the current $i_{10}$ of capacitor 10. Since the capacitors 7 and 10 and the inductor 11 constitute a tuned circuit, current flows from the capacitor 7 to the capacitor 10 during part of the period $t_1$ for which the switch 6 is conductive. The current path is shown by the broken line 16, and it thus flows through the switch 6, contributing the current component $i_{10}$ referred to previously. However, the diode 12 allows currents to flow only in a single direction and by making the capacitor 10 greater than that of the capacitor 7, it is ensured that the whole of the charge on capacitor 7 is transferred to capacitor 10 during the first half cycle of oscillation. The oscillation ceases after the first half cycle as diode 12 then becomes reversed biassed. The polarity of the voltage $V_{10}$ on capacitor 10 at this stage is indicated on Figure 1.

When the switch 6 becomes non-conductive during time $t_2$, the voltage at point 15 rises as previously explained and this voltage when added to the voltage on capacitor 10 causes diode 13 to conduct. This has the effect of completely discharging capacitor 10 into capacitor 9 and the load 14. The voltage at point 15 continues to increase until it reaches the output voltage held on capacitor 9, when the diode 18 then begins to conduct. Thus the energy held on storage capacitor 10 is transferred to the load 14, with the large output capacitor 9 providing smoothing of the output voltage level. The times $t_{13}$ and $t_{18}$ at which the diodes 13 and 18 conduct are indicated in Figure 2 on the voltage $V_6$ since their operation is directly dependent on the voltage variations on the switch 6. The voltage $V_6$ initially rises rapidly at the beginning of time $t_2$ when it becomes non-conductive, the initial rate of rise being dictated by the snubbing capacitor 7. The rate reduces when the diode 13 conducts at time $t_{13}$, and levels off when diode 18 conducts at time $t_{18}$. After time $t_{18}$, the inductor current $i_5$ flows directly to the capacitor 9. The charging current $i_9$ for capacitor 9 via diodes 13 and 18 is indicated on Figure 2 - $i_9$ also includes the load current. For the sake of convenience the discharge voltage waveform $V_7$ of capacitor 7 is also shown in broken line on the waveform $V_6$, which is the voltage on the switch 6.

In operation a steady d.c. voltage is applied to the terminals 1 and 2, and this is "chopped" under the action of a rectangular waveform control signal applied to terminals 19 and 20. This waveform has a mark-space ratio $t_1$ to $t_2$, as previously described, and the repetition rate of the waveform is made as high as practicable. At high frequency operation the component sizes of the inductor 5 and capacitor 9 can be relatively small, but switching losses in the switch 6 can cause a large proportion of the chopped energy to be diverted to capacitor 7. The size of capacitor 7 is determined by the acceptable initial rate at which voltage $V_6$ can rise without causing damage to the switch 6. Since the size of capacitor 10 is dictated by the need to transfer to it the whole of the charge held on capacitor 7 within one half period of the resonant period of the tuned circuit comprising capacitor 7, inductor 11 and capacitor 10, it is inductor 11 which is dimensioned to provide the necessary period of resonance. It will be appreciated that since the energy diverted to capacitor 7 is passed on to the output terminals, the overall operation of the converter circuit is very efficient. Moreover its efficiency does not necessarily decrease at high switching frequencies, since although a greater proportion of the total energy is fed to capacitor 7, this energy is subsequently applied to the load 14. The energy temporarily held on capacitor 7 is passed on by wholly passive circuits, and the absence of additional active devices further enhances the efficiency.

Claims

1.  A d.c. converter for producing a d.c. output voltage from a lower d.c. input voltage including a switch connected to receive the input voltage via an inductor, a snubbing capacitor connected in shunt with said switch to restrict the rate of increase of a potential appearing across said switch when it changes from a conductive to a non-conductive state, and a reactive circuit coupled to said capacitor for transferring energy from it to the point at which the d.c. output voltage is provided.

2.  A converter as claimed in claim 1 and wherein said capacitor and said reactive circuit together constitute part of a tuned circuit having a half oscillatory period which is less than the period for which the switch is conductive during a switching cycle.

3.  A converter as claimed in claim 2 and wherein said reactive circuit includes a storage capacitor which has a capacitance which is equal to or greater than that of the snubbing capacitor.

4.  A converter as claimed in claim 3 and wherein the reactive circuit also includes an inductor connected in series between the snubbing capacitor and the storage capacitor with the inductance of the inductor determining the oscillatory period of the reactive circuit.

5.  A converter as claimed in claim 4 and wherein a diode is connected in series with said diode in the current path between the snubbing capacitor and the storage capacitor, so that energy is transferred to the storage capacitor only whilst the potential on the snubbing capacitor exceeds the potential on the storage capacitor and is not subsequently returned to the snubbing capacitor.

6.  A converter as claimed in claim 5 and wherein the energy held on the storage capacitor is fed to the output terminal of the converter during those periods when the switch is non-conductive.

7.  A converter as claimed in claim 6 and wherein the energy is fed from the storage capacitor to the output terminal under the action of a further diode, which is biassed into conduction in dependence on the potential difference appearing across said storage capacitor and said switch whilst it is non-conductive.

8.    A converter as claimed in claim 7 and wherein a second
further diode is provided, it being biassed into conduction in
dependence on the potential difference appearing across said
switch whilst it is non-conductive, and the diode being
arranged to become conductive when said storage capacitor has
been discharged.

FIG. 1.

**FIG.2.**